# EUROPÄISCHE PATENTSCHRIFT

(11) **EP 3 650 700 B1**
(45) Veröffentlichungstag und Bekanntmachung des Hinweises auf die Patenterteilung: **28.02.2024**
(21) Anmeldenummer: 18205313.2
(22) Anmeldetag: 09.11.2018
(51) Int. Cl.: F04D 17/16, F04D 19/04, F04D 27/00, F04D 29/08, F04D 29/16, F16J 15/06

(54) **VAKUUMGERÄT**
VACUUM DEVICE
APPAREIL À VIDE

(43) Veröffentlichungstag der Anmeldung: 13.05.2020
(73) Patentinhaber: PFEIFFER VACUUM GMBH, 35614 Asslar (DE)
(72) Erfinder: Conrad, Armin, 35745 Herborn (DE); WIRTH, Adrian, 35619 Braunfels (DE); Wielsch, Pascal, 35625 Hüttenberg (DE)
(74) Vertreter: Manitz Finsterwald Patent- und Rechtsanwaltspartnerschaft mbB

(56) Entgegenhaltungen:
- EP-A1- 3 026 303
- JP-A- 2010 196 834
- US-A1- 2007 012 117
- US-A1- 2009 315 267
- US-B1- 6 615 639
- US-B1- 8 061 211

## Beschreibung

Die vorliegende Erfindung betrifft ein Vakuumgerät, insbesondere Vakuumpumpe, mit einer elastischen Dichtung.

Ein Vakuumgerät nach dem Oberbegriff des Anspruchs 1 ist in der US 2007/0012117 A1 offenbart. Die US 2009/0315267 A1 offenbart eine Dichtungsanordnung mit in-situ-Lebensdauermessung. Die US 8,061,211 B1 offenbart eine Dichtung mit einem integrierten Sensor. Die EP 3 026 303 A1 offenbart eine Vakuumpumpe, Vakuumzubehör und eine Dichtung zu dessen Abdichtung. Die US 6,615,639 B1 offenbart eine Dichtung mit einem Leiter in der Dichtung, anhand dessen Leitfähigkeit die Notwendigkeit eines Austauschs der Dichtung ermittelt wird. JP 2010 196834 A offenbart eine Dichtungsüberwachung die auf Ultraschallwellen basiert ist.

In einem Vakuumsystem werden die einzelnen Vakuumgeräte, wie z.B. Vakuumkammer, Messgeräte oder Vakuumpumpe, an ihren Verbindungsstellen abgedichtet, um den gewünschten Druck realisieren zu können. Dabei können unterschiedliche Dichtungen zum Einsatz kommen, wie z.B. elastische O-Ringe. Aufgrund der Pressung des elastischen Materials auf die Dichtflächen, welche auch als Verpressung bezeichnet wird und welche aus dem Einbau sowie aus dem abzudichtenden höheren Atmosphärendruck außerhalb des Vakuumsystems resultiert, lässt sich die gewünschte Dichtwirkung erzielen. Dichtungen können auch innerhalb eines Vakuumgerätes zum Einsatz kommen, z.B. zwischen Gehäuseteilen einer Vakuumpumpe.

Während der Laufzeit des Systems kommt es zu Alterungsprozessen der Dichtungen. Das Material kann porös werden oder es kann ein Übergang vom elastischen in den viskoelastischen Zustand beobachtet werden. Dabei steigt der Druckverformungsrest an, was sich dadurch bemerkbar macht, dass die Dichtung nach dem Ausbau nicht in ihre Ursprungsform zurückkehrt. Zusätzlich sinkt die Rückstellkraft innerhalb des Materials, wodurch die Dichtwirkung sinkt und Leckagen auftreten können. Diese Alterungsprozesse werden in der Realität häufig aufgrund von nichtverträglichen Substanzen, z.B. Ölen, ionisierender Strahlung, für das Material ungeeigneten Temperaturen oder UV-Strahlung beschleunigt. Eine weitere Ursache für eine ungenügende Dichtwirkung stellt eine falsche Montage der Dichtung dar, welche beispielsweise aus nicht kompatiblen Komponenten, defekten Dichtflächen und Dichtungen oder einer ungenügenden Verpressung resultieren.

Obwohl solche Dichtungen, insbesondere O-Ringe, ein sehr kostengünstiges Produkt sind, haben diese Komponenten einen wesentlichen Einfluss auf die Funktionstauglichkeit der gesamten Anlage oder des gesamten Prozesses. Aus einer mangelhaften Dichtwirkung einer einzelnen Dichtung können eine Prozessunterbrechung sowie eine Sicherheitsgefährdung resultieren. Beispielsweise können korrosive Gase aus dem System austreten oder ein Defekt an einer Vakuumpumpe oder einer Anlage mit den damit verbundenen Sicherheitsrisiken entstehen.

Es ist eine Aufgabe der Erfindung, ein Vakuumgerät mit verbesserter Dichtung anzugeben und insbesondere die vorgenannten Effekte einer mangelhaften Dichtung zu mindern.

Diese Aufgabe wird durch ein Vakuumgerät mit den Merkmalen des Anspruchs 1 gelöst, und insbesondere dadurch, dass eine Sensoreinrichtung vorgesehen ist, mittels derer eine zum Zustand der Dichtung korrespondierende Information, insbesondere während einer Montage, einer Inbetriebnahme und/oder eines Betriebs des Vakuumgeräts, ermittelbar ist.

Damit lässt sich das Material der Dichtung in-situ diagnostizieren und somit ein bevorstehender Ausfall evtl. frühzeitig erkennen. Während des Einbaus lassen sich Montagefehler unmittelbar identifizieren und Fehler sowie Ausfälle und die daraus resultierenden Konsequenzen im Betrieb rechtzeitig verhindern. Allgemein kann auch die Vakuumdichtigkeit des Geräts überprüft und überwacht werden.

Weiterhin kann eine Versprödung oder viskoelastische Veränderung des Materials der Dichtung aufgrund von Alterungsprozessen oder einer Degradierung durch nicht verträgliche Substanzen, ionisierende Strahlung oder ungeeignete Temperaturen und UV-Strahlung überwacht werden. Damit besteht eine vorteilhafte Möglichkeit, den Zustand der Dichtung zu beurteilen (was auch als Condition Monitoring bezeichnet werden kann) und eine zustandsorientierte Wartung zu implementieren (was auch als Predictive Maintenance bezeichnet werden kann). Ein vorzeitig notwendiger Austausch einer Dichtung kann somit zuverlässig erkannt und/oder ein Wartungsintervall angepasst werden. Im Fehlerfall, wie beispielsweise wenn eine Pumpe nicht eine gewünschte Drehzahl erreicht, kann der Verpressungszustand der Dichtung auf seine Ordnungsmäßigkeit hin überprüft werden. Beispielsweise kann daraufhin, insbesondere in einer automatisierten Implementierungsform, der Monteur oder Bediener direkt über eine Fehlmontage oder allgemein über einen unerwünschten Dichtungszustand informiert werden.

Allgemein kann die Information vorteilhaft zu einer Verpressung korrespondieren oder hierdurch gebildet sein. Insbesondere kann also mittels der Sensoreinrichtung eine Verpressung ermittelbar sein, anhand derer auf einen Zustand der Dichtung geschlossen wird, beispielsweise durch die Sensoreinrichtung selbst oder eine Auswertungselektronik.

Das Vakuumgerät kann beispielsweise als Vakuumkammer, Vakuumpumpe, insbesondere Turbomolekularpumpe, Drehschieberpumpe, Wälzkolbenpumpe oder ähnliches, oder als Messgerät ausgebildet sein. Das Vakuumgerät kann z.B. auch eine Vorvakuumpumpe bilden.

Die Dichtung kann beispielsweise als eine Ring- oder Schnurdichtung, insbesondere als ein O-Ring, ausgeführt sein. Eine solche ist mit guter Dichtungswirkung einfach und kostengünstig herstellbar.

Insbesondere bildet die Dichtung eine statische Dichtung, d.h. im Betrieb des Vakuumgeräts sind die Dichtung und hieran anliegende Dichtflächen fest bzw. bewegen sich nicht relativ zueinander.

Die Dichtung kann mit vorteilhafter Dichtwirkung einen Elastomer-Werkstoff umfassen.

Erfindungsgemäß umfasst die Sensoreinrichtung einen Sensor für elektromagnetische Strahlung, also einen elektromagnetischen Wellensensor, und/oder einen Sensor für Ultraschall, umfassend einen Wellensender und einen Wellenempfänger, welche auf gegenüberliegenden Seiten der Dichtung an einer Innenseite der Dichtung und an einer Außenseite der Dichtung angeordnet und derart eingerichtet sind, dass sich die Wellen vom Sender durch die Dichtung hindurch zum Empfänger ausbreiten und anhand einer Veränderung der Wellen auf diesem Weg die zum Zustand korrespondierende Information ableitbar ist. Der elektromagnetische Wellensensor kann beispielsweise hochfrequente und/oder ultrahochfrequente Wellen aufweisen.

Bei einer Weiterbildung ist die Sensoreinrichtung dazu ausgebildet, die Information nur punktuell zu ermitteln. Es wurde erkannt, dass dies bei elastischen Dichtungen in Vakuumgeräten ausreichend sein kann, wenn die alterungsbedingten Mängel relativ gleichmäßig über die Dichtung verteilt auftreten. Folglich kann einerseits die Sensoreinrichtung durch die nur punktuelle Ermittlung besonders kostengünstig ausgeführt werden und andererseits hat sie nur einen punktuellen und damit geringen Einfluss auf die Dichtungswirkung. Der Begriff "punktuell" ist dabei selbstverständlich nicht im mathematischen Sinn zu verstehen, wonach ein Punkt keine räumliche Ausdehnung hätte. Vielmehr ist damit eine Zustandsermittlung in nur einem kleinen Teilbereich der Dichtung gemeint. Insbesondere erstreckt sich die Sensoreinrichtung nicht über einen ganzen Ring einer Ringdichtung oder nicht über eine im Wesentlichen ganze Fläche einer Flächendichtung. Im Falle einer Ringdichtung ist die Sensoreinrichtung insbesondere nur in einem Teilbereich angeordnet, der einem Ringwinkelbereich von weniger als 10°, insbesondere weniger als 5°, entspricht.

Es können aber vorteilhafter Weise auch mehrere Sensoreinrichtungen für die Dichtung vorgesehen sein, welche insbesondere an unterschiedlichen Positionen, insbesondere unterschiedlichen Winkelpositionen einer Ringdichtung, angeordnet sein können. Hierdurch kann der Gesamtzustand der Dichtung noch zuverlässiger ermittelt werden. Beispielsweise können diese Sensoreinrichtungen, insbesondere durch eine, vorzugsweise gemeinsame, Auswertungselektronik, getrennt auswertbar sein.

Bei einer weiteren Ausführungsform ist eine Auswertungselektronik vorgesehen, mittels derer in Abhängigkeit von der zum Zustand der Dichtung korrespondierenden Information ein Fehlerzeichen und/oder eine Wartungsaufforderung ausgebbar ist und/oder die zur Ausgabe einer solchen eingerichtet ist. Die eingangs beschriebenen Gefahren einer mangelhaften Dichtung können somit zuverlässig und auf einfache Weise vermieden werden.

Es kann beispielsweise eine Drahtlos-Übertragungseinrichtung vorgesehen sein, die beispielsweise von der Sensoreinrichtung und/oder einer Auswertungselektronik umfasst sein kann. Die Drahtlos-Übertragungseinrichtung kann insbesondere eine RFID-Einheit, insbesondere zur Übertragung an eine Auswertungselektronik, umfassen. Dies ermöglicht eine besonders flexible Anordnung im Vakuumgerät, insbesondere in Verbindung mit einer besonders einfachen Austauschbarkeit der Dichtung, da keine Leitungen wiederverbunden werden müssen. Außerdem erweist sich diese Ausführungsform besonders während der Montage der Dichtung als vorteilhaft. Während der Montage ist das Vakuumgerät möglichweise noch nicht soweit betriebsbereit, dass eine Auswertungselektronik des Vakuumgeräts einen Fehler anzeigen kann. Der Monteur kann einfach mit einem geeigneten Empfänger die Informationen über die Drahtlos-Übertragungseinrichtung abfragen und somit eine direkte Rückmeldung über die Ordnungsmäßigkeit der Dichtungsmontage erhalten. Insbesondere können die Sensoreinrichtung und/oder die Drahtlos-Übertragungseinrichtung drahtlos und/oder induktiv, insbesondere von einer Empfängereinrichtung, beispielsweise einem RFID-Empfänger, mit Energie versorgbar sein.

Die Sensoreinrichtung kann beispielsweise auch dazu ausgebildet sein, eine die Dichtung in Identität und/oder Art kennzeichnende Information, insbesondere an eine Auswertungselektronik, auszugeben. Hierdurch kann in einem System mit mehreren Dichtungen eine mangelhafte Dichtung unmittelbar erkannt werden und die Wartungszeit reduziert werden.

Die Dichtung kann beispielsweise an einer Flanschverbindung zu einem weiteren Vakuumgerät, beispielsweise einer Flanschverbindung zwischen einer Vakuumpumpe und einer Vakuumkammer oder einer Flanschverbindung zwischen einer Vakuumpumpe und einer Vorvakuumpumpe, oder zwischen Gehäuseteilen des Vakuumgeräts, z.B. an einem Deckel einer Lagerfassung, angeordnet sein. Die Dichtung kann allgemein beispielsweise einen Hoch- oder Hauptvakuumbereich und/oder auch beispielsweise einen Vorvakuumbereich abdichten. Es können auch mehrere erfindungsgemäß überwachte Dichtungen an mehreren der genannten Stellen vorgesehen sein.

Allgemein können auch mehrere Dichtungen im Vakuumgerät vorgesehen sein und insbesondere durch eine gemeinsame Auswertungselektronik für individuelle Sensoreinrichtungen überwacht werden. Dies ist besonders vorteilhaft mittels einer drahtlosen Informationsübertragung realisierbar.

Die Aufgabe der Erfindung wird auch durch ein Vakuumsystem mit den Merkmalen des hierauf gerichteten, unabhängigen Anspruchs 9 gelöst.

Die Erfindung wird ferner auch durch ein Verfahren zum Betrieb eines Vakuumgeräts oder Vakuumsystems gelöst, wie es im hierauf gerichteten, unabhängigen Verfahrensanspruch angegeben ist.

Die hierin beschriebenen unabhängigen Aspekte Vakuumgerät, Vakuumsystem und Betriebsverfahren können selbstverständlich auch im Sinne der beschriebenen Ausführungsformen der jeweils anderen Aspekte vorteilhaft weitergebildet werden.

Die Erfindung wird nachfolgend lediglich beispielhaft anhand der schematischen Zeichnung erläutert.
- Fig. 1: zeigt ein nicht zur Erfindung gehörendes Beispiel einer Dichtung eines Vakuumgeräts.
- Fig. 2: zeigt eine weiteres nicht zur Erfindung gehörendes Beispiel einer solchen Dichtung.
- Fig. 3: zeigt eine weiteres nicht zur Erfindung gehörendes Beispiel einer solchen Dichtung.
- Fig. 4: zeigt eine erfindungsgemäße Ausführungsform einer Dichtung eines Vakuumgerätes.
- Fig. 5: zeigt verschiedene Dichtungsanordnungen an einer Vakuumpumpe.

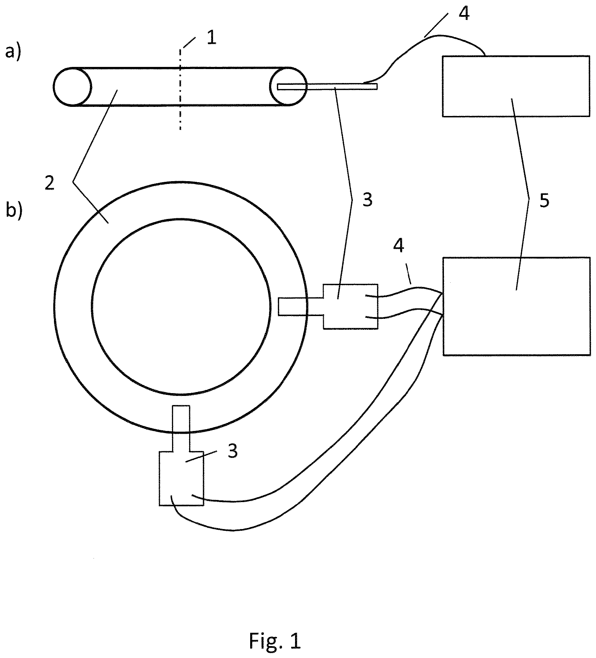

In den Fig. 1 bis 4 ist jeweils eine Dichtung 2 in einem Querschnitt (a) und einer Draufsicht (b) gezeigt.

Für die Zustandsüberwachung von elastischen Dichtungen wird an einer, beispielsweise als O-Ring ausgeführten, Dichtung 2 gemäß Fig. 1 wenigstens eine, hier zwei, geeignete Sensoreinrichtung 3 verwendet, z.B. ein miniaturisierter Dünnschicht-Dehnungsmessstreifen, welcher insbesondere radial in das Dichtungsmaterial integriert wird. Durch eine Kabelverbindung 4 mit einer Mess- und Auswertungseinrichtung 5 können Veränderungen der Pressung der Dichtung 2 und über die Auswertung des Sensorsignals deren Zustand überwacht werden. Dabei korreliert das Sensorsignal mit der Pressung der Dichtung 2.

Grundsätzlich besteht die Möglichkeit, eine oder mehrere Sensoreinrichtungen an unterschiedlichen Stellen innerhalb der Dichtung 2 zu integrieren, beispielsweise um effizientere Aussagen über den Zustand der Dichtung 2 treffen zu können. Für die Sensoreinrichtung sind eine Strahlungsresistenz sowie eine Temperatureignung im erforderlichen Bereich wünschenswert.

Allgemein ist es, insbesondere aufgrund der generell spulenartigen Ausprägung von Dehnungsmessstreifen, vorteilhaft, eine Abschirmung, insbesondere zu elektromagnetischen Wirbelfeldern, vorzusehen, um induzierte Störsignale zu vermeiden. Alternativ oder zusätzlich können entsprechend eingespeiste Störungen durch einen Algorithmus (z.B. FFT) oder einen Lock-In-Amplifier wirkungsvoll vor der Auswertung isoliert und ausgefiltert werden.

Alternativ oder zusätzlich zu der beschriebenen Sensorik ist es beispielsweise möglich, einen Temperatursensor und/oder einen Sensor zur Messung der Dielektrizität in einer elastischen Dichtung zu integrieren. Auch diese erlauben Rückschlüsse auf den Zustand und insbesondere den Alterungsgrad der Dichtung.

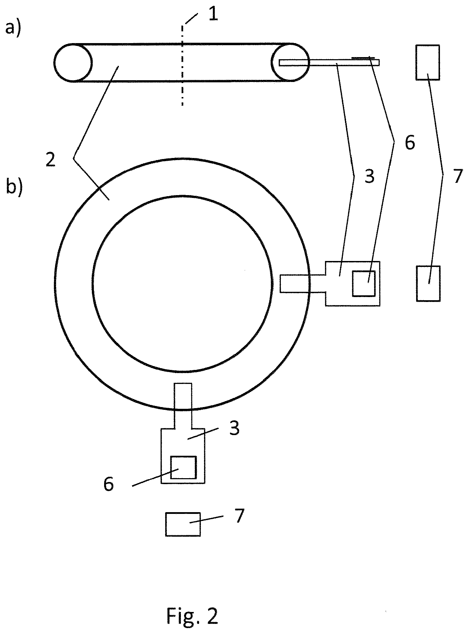

In Fig. 2 ist eine Dichtung 2 mit zwei Sensoreinrichtungen 3 gezeigt, welche jeweils eine Drahtlos-Übertragungseinrichtung aufweisen, die hier beispielhaft als ein RFID-Sender 6 ausgebildet ist. Eine Empfangseinrichtung, insbesondere ein RFID-Empfänger 7, ist vorgesehen, um die den Zustand der Dichtung kennzeichnenden Informationen zu einer hier nicht dargestellten Mess- und/oder Auswertungseinrichtung weiterzuleiten. Eine Mess- und/oder Auswertungselektronik oder -einrichtung kann aber grundsätzlich auch auf der Seite des Senders 6 vorgesehen sein, sodass beispielsweise über die Drahtlos-Übertragungseinrichtung nur eine Fehlermeldung und/oder Wartungsaufforderung übertragen wird.

Als kostengünstige und zugleich elegante und ansprechende Lösung können beispielsweise "smarte" O-Ringe, insbesondere mit einer eigenen Intelligenz, wie etwa einem Mikroprozessor, vorgesehen sein, die insbesondere mit weiteren in der Anlage befindlichen O-Ringen verbindbar sein können. Die Sensoreinrichtung kann vorteilhaft eine Information betreffend Identität und/oder Art der Dichtung ausgeben, beispielsweise um die Wartung eines Geräts oder Systems mit vielen Dichtungen zu vereinfachen.

Weiterhin vorteilhaft ist es, eine Data-Logging-Einrichtung für die Sensoreinrichtung, beispielsweise unmittelbar an der Sensoreinrichtung und/oder separat hiervon vorzusehen.

Unmittelbar an der Sensoreinrichtung 3, welche beispielsweise als Dehnungsmessstreifen ausgebildet sein kann, ist bei der Ausführungsform gemäß Fig. 2 der RFID-Sender 6 beispielhaft auf derselben Tragstruktur, beispielsweise Platine oder Film, vorgesehen wie die Sensoreinrichtung.

Der RFID-Empfänger 7 kann insbesondere den RFID-Sender 6 und vorzugsweise auch die Sensoreinrichtung mit Energie über ein elektromagnetisches Wechselfeld versorgen. Je nach Abstand beider RFID Einheiten ist eine ausreichende Sendeleistung des RFID Empfängers entsprechend vorzusehen.

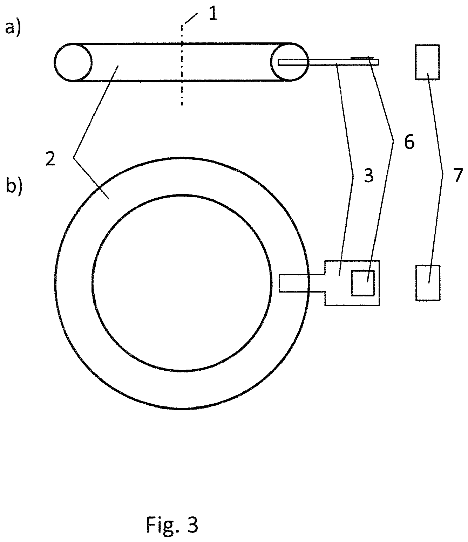

In Fig. 3 ist beispielhaft eine weitere Dichtung 2 mit nur einer Sensoreinrichtung 3 gezeigt, die in diesem Beispiel ebenfalls mit RFID-Sender und -Empfänger 6,7 ausgestattet ist.

Bei einem beispielhaften Betriebsverfahren ist für ein Condition Monitoring vorteilhafter Weise ein Abtastintervall im Bereich von Stunden oder Tagen vorgesehen. Für eine Montageüberwachung ist dagegen ein Abtastinterval im Bereich von Sekunden, insbesondere eine Abtastfrequenz von etwa 1 Hz, vorteilhaft.

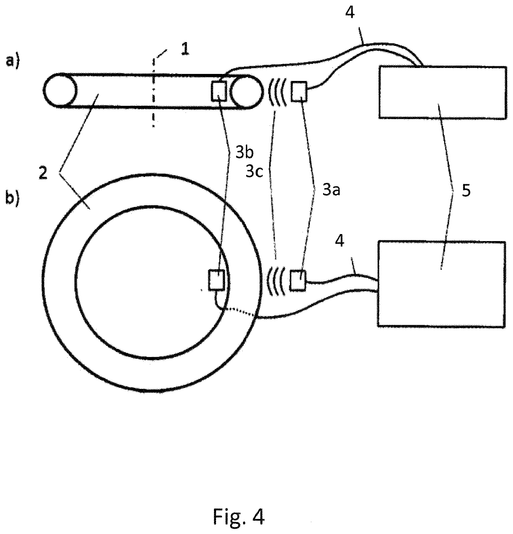

Ein erfindungsgemäßes Ausführungsbeispiel ist in Fig. 4 gezeigt. Für die Überprüfung und Überwachung der Vakuumdichtigkeit in Vakuumsystemen wird demnach eine Vorrichtung verwendet, welche als Sensoreinrichtung 3 einen elektromagnetischen Wellensensor umfasst, welcher hier beispielhaft ein (Ultra-)Hochfrequenz-Sender-Empfänger-System mit einer Mess- und Auswertungseinrichtung 5 ausgebildet ist. Alternativ oder zusätzlich umfasst die Sensoreinrichtung (3) einen Sensor für Ultraschall. Dabei wird sowohl ein Sender 3a als auch ein Empfänger 3b auf gegenüberliegenden Seiten von einem Material einer elastischen Dichtung 2 eingesetzt. Mit der Mess- und Auswertungseinrichtung 5, welche auch in der Elektronik einer Vakuumpumpe implementiert sein kann, sind Sender 3a und Empfänger 3b über eine Kabelverbindung 4 kontaktiert. Der Sender 3a emittiert hochfrequente Wellen 3c auf einer Seite der Dichtung 2, z.B. auf der Außenseite eines Dichtungsrings, welche von dem Empfänger auf der gegenüberliegenden Seite, z.B. auf der Innenseite des Dichtungsrings, detektiert und von der Auswertungseinrichtung 5 analysiert werden. Der Frequenzbereich, z.B. Hochfrequenz und/oder Ultrahochfrequenz, kann dabei variabel abgestimmt werden.

Die Anordnung kann in einer weiteren Ausprägung auch umgekehrt werden, sodass der Sender auf der Innenseite und der Empfänger auf der Außenseite liegen. Hierbei handelt es sich um eine besonders bevorzugte Anordnung, da die HF/UHF Wellen durch die metallischen Bauteile abgeschirmt werden und somit im Außenbereich des Vakuumsystems eine geringere Belastung durch elektromagnetische Wellen vorhanden ist, was in einer verbesserten elektromagnetischen Verträglichkeit resultiert.

Die, insbesondere hochfrequenten, Wellen 3c durchlaufen das, insbesondere elastische, Dichtungsmaterial und verändern sich in ihren Eigenschaften. Diese Veränderung, insbesondere von Amplitude und Phase, wird vom Empfänger detektiert und ausgewertet. Je nach Stärke der Veränderung können Rückschlüsse auf den Zustand der Dichtung gezogen werden, da die Veränderung des Materials zu einer Beeinflussung von Amplitude und Phase der Wellen führt.

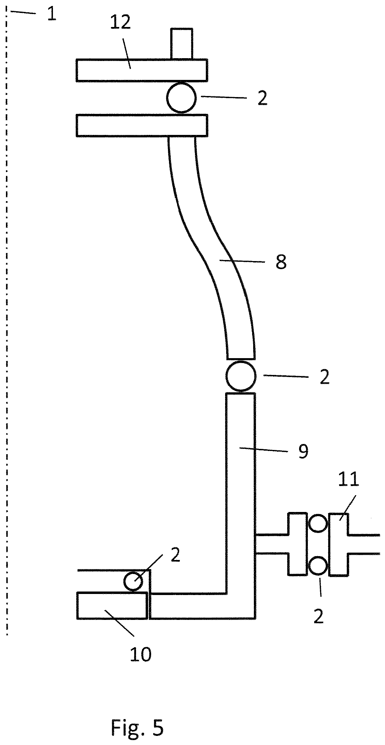

Eine erfindungsgemäße, beispielsweise als O-Ring ausgeführte, Dichtung mit einer, insbesondere zumindest teilweise integrierten, Sensoreinrichtung zur Zustandsermittlung und/oder -überwachung kann in beliebigen Konfigurationen in Vakuumsystemen verwendet werden, z.B. in typischen Flanschverbindungen 11, 12 gemäß Fig. 5. Hier ist eine Vakuumpumpe, welche nur zum Teil dargestellt und zu einer Symmetrieachse 1 im Wesentlichen symmetrisch ausgebildet ist, mit einer Flanschverbindung 12 zu einer nicht gezeigten Vakuumkammer und einer Flanschverbindung 11 zu einer nicht gezeigten Vorvakuumpumpe beispielhaft gezeigt. Es ist grundsätzlich auch möglich, eine Dichtung mit Sensoreinrichtung an geeigneten Stellen innerhalb des Vakuumgeräts bzw. der Vakuumpumpe einzusetzen, z.B. zwischen einem ersten Gehäuseteil 6 und einem zweiten Gehäuseteil, insbesondere Unterteil 9, oder in einem Deckel einer Lagerfassung 10. So kann allgemein die ordnungsgemäße Montage und Dichtigkeit der Pumpe überprüft und sichergestellt werden.

Weiterhin ist eine Kombination der beschriebenen Ausführungsformen denkbar, um möglichst effiziente Aussagen über die Vakuumdichtigkeit eines Vakuumsystems treffen zu können. Beispielsweise ist die Ausführungsform mit dem elektromagnetischen Wellensensor sensitiv bei einer Veränderung der Materialeigenschaften (z.B. die Änderung der Härte durch radioaktive Strahlung), wohingegen sich der Einsatz eines, insbesondere miniaturisierten Dünnschicht-, Dehnungsmessstreifens bei der Veränderung des Verpressungszustands der, insbesondere elastischen, Dichtung gut eignet. Mit der Kombination der unterschiedlichen Detektionsmöglichkeiten lassen sich somit mehrere Anwendungsfälle der Erfindung abdecken, von der Überprüfung eines ordnungsgemäßen Montagezustands von Vakuumgerät oder -system über die Überprüfung und Überwachung der Vakuumdichtigkeit während des Betriebs bis hin zur vorrausschauenden Detektion einer entstehenden Undichtigkeit, die möglicherweise Ausfälle, Schäden oder andere Gefahren, wie z.B. dem Austritt von gefährlichen Gasen, vorbeugen kann.

### Bezugszeichenliste

- 1: Symmetrieachse
- 2: Dichtung
- 3: Sensoreinrichtung
- 4: Kabelverbindung
- 5: Auswertungs- und Messeinheit
- 6: RFID-Sender
- 7: RFID-Empfänger
- 8: Gehäuseteil
- 9: Unterteil
- 10: Deckel der Lagerfassung
- 11: Flanschverbindung
- 12: Flanschverbindung

## Patentansprüche

1. Vakuumgerät, insbesondere Vakuumpumpe, umfassend,
eine, insbesondere elastische, Dichtung (2) und
eine Sensoreinrichtung (3), mittels derer eine zum Zustand der Dichtung korrespondierende Information ermittelbar ist,
**dadurch gekennzeichnet,**
**dass** die Sensoreinrichtung (3) einen Sensor für elektromagnetische Strahlung und/oder einen Sensor für Ultraschall umfasst,
wobei der Sensor einen Wellensender (3a) und einen Wellenempfänger (3b) aufweist, welche auf gegenüberliegenden Seiten der Dichtung (2) an einer Innenseite der Dichtung (2) und an einer Außenseite der Dichtung (2) angeordnet und derart eingerichtet sind, dass sich die Wellen vom Wellensender (3a) durch die Dichtung (2) hindurch zum Wellenempfänger (3b) ausbreiten und anhand einer Veränderung der Wellen auf diesem Weg die zum Zustand korrespondierende Information ableitbar ist.

2. Vakuumgerät nach Anspruch 1,
**dadurch gekennzeichnet, dass**
die Dichtung (2) eine Ring- oder Schnurdichtung ist.

3. Vakuumgerät nach wenigstens einem der vorstehenden Ansprüche,
**dadurch gekennzeichnet, dass**
die Sensoreinrichtung (3) dazu ausgebildet ist, die Information nur punktuell zu ermitteln.

4. Vakuumgerät nach wenigstens einem der vorstehenden Ansprüche,
**dadurch gekennzeichnet, dass**
mehrere Sensoreinrichtungen (3) für die Dichtung (2) vorgesehen sind.

5. Vakuumgerät nach wenigstens einem der vorstehenden Ansprüche,
**dadurch gekennzeichnet, dass**
eine Auswertungselektronik (5) vorgesehen ist, mittels derer in Abhängigkeit von der zum Zustand der Dichtung (2) korrespondierenden Information ein Fehlerzeichen und/oder eine Wartungsaufforderung ausgebbar ist.

6. Vakuumgerät nach wenigstens einem der vorstehenden Ansprüche,
**dadurch gekennzeichnet, dass** die Sensoreinrichtung (3) eine Drahtlos-Übertragungseinrichtung (6) für die Information umfasst.

7. Vakuumgerät nach wenigstens einem der vorstehenden Ansprüche,
**dadurch gekennzeichnet, dass**
die Sensoreinrichtung (3) dazu ausgebildet ist, eine die Dichtung (2) in Identität und/oder Art kennzeichnende Information auszugeben

8. Vakuumgerät nach wenigstens einem der vorstehenden Ansprüche,
**dadurch gekennzeichnet, dass**
die Dichtung (2) an einer Flanschverbindung (11, 12) zu einem weiteren Vakuumgerät oder zwischen Gehäuseteilen (8, 9, 10) des Vakuumgeräts angeordnet ist.

9. Vakuumsystem umfassend zwei Vakuumgeräte, welche fluidisch miteinander kommunizierend an einer Verbindungsstelle, insbesondere Flanschverbindung (11, 12), miteinander verbunden sind,
wobei die Verbindungsstelle mittels einer Dichtung (2) abgedichtet ist, und
wobei eine Sensoreinrichtung (3) vorgesehen ist, mittels derer eine zum Zustand der Dichtung (2) korrespondierende Information ermittelbar ist, wobei die Sensoreinrichtung (3) einen Sensor für elektromagnetische Strahlung und/oder einen Sensor für Ultraschall umfasst,
wobei der Sensor einen Wellensender (3a) und einen Wellenempfänger (3b) aufweist, welche auf gegenüberliegenden Seiten der Dichtung (2) an einer Innenseite der Dichtung (2) und an einer Außenseite der Dichtung (2) angeordnet und derart eingerichtet sind, dass sich die Wellen vom Wellensender (3a) durch die Dichtung (2) hindurch zum Wellenempfänger (3b) ausbreiten und anhand einer Veränderung der Wellen auf diesem Weg die zum Zustand korrespondierende Information ableitbar ist.

10. Verfahren zum Betrieb eines Vakuumgeräts oder Vakuumsystems umfassend eine Dichtung (2),
wobei mittels einer Sensoreinrichtung (3) eine zum Zustand der Dichtung (2) korrespondierende Information ermittelt wird,
wobei die Sensoreinrichtung (3) einen Sensor für elektromagnetische Strahlung und/oder einen Sensor für Ultraschall umfasst,
wobei der Sensor einen Wellensender (3a) und einen Wellenempfänger (3b) aufweist, welche auf gegenüberliegenden Seiten der Dichtung (2) an einer Innenseite der Dichtung (2) und an einer Außenseite der Dichtung (2) angeordnet und derart eingerichtet sind, dass sich die Wellen vom Wellensender (3a) durch die Dichtung (2) hindurch zum Wellenempfänger (3b) ausbreiten und anhand einer Veränderung der Wellen auf diesem Weg die zum Zustand korrespondierende Information abgeleitet wird.

## Claims

1. A vacuum device, in particular a vacuum pump, comprising
a seal (2), in particular an elastic seal (2), and
a sensor device (3) by means of which information corresponding to the state of the seal can be determined,
**characterized in that**
the sensor device (3) comprises a sensor for electromagnetic radiation and/or a sensor for ultrasound,
wherein the sensor has a wave transmitter (3a) and a wave receiver (3b) which are arranged at oppositely disposed sides of the seal (2) at an inner side of the seal (2) and at an outer side of the seal (2) and which are configured such that the waves propagate from the wave transmitter (3a) through the seal (2) to the wave receiver (3b) and the information corresponding to the state can be derived based on a change in the waves on this path.

2. A vacuum device according to claim 1,
**characterized in that**
the seal (2) is a ring seal or cord seal.

3. A vacuum device according to at least one of the preceding claims,
**characterized in that**
the sensor device (3) is configured to determine the information only selectively.

4. A vacuum device according to at least one of the preceding claims,
**characterized in that**
a plurality of sensor devices (3) are provided for the seal (2).

5. A vacuum device according to at least one of the preceding claims,
**characterized in that**
evaluation electronics (5) are provided by means of which an error sign and/or a maintenance request can be output depending on the information corresponding to the state of the seal (2).

6. A vacuum device according to at least one of the preceding claims, **characterized in that** the sensor device (3) comprises a wireless transmission device (6) for the information.

7. A vacuum device according to at least one of the preceding claims,
**characterized in that**
the sensor device (3) is configured to output information characterizing the seal (2) in terms of identity and/or type.

8. A vacuum device according to at least one of the preceding claims,
**characterized in that**
the seal (2) is arranged at a flange connection (11, 12) to a further vacuum device or between housing parts (8, 9, 10) of the vacuum device.

9. A vacuum system comprising two vacuum devices which are connected to one another in fluidic communication at a connection point, in particular a flange connection (11, 12),
wherein the connection point is sealed by means of a seal (2), and wherein a sensor device (3) is provided by means of which information corresponding to the state of the seal (2) can be determined,
wherein the sensor device (3) comprises a sensor for electromagnetic radiation and/or a sensor for ultrasound,
wherein the sensor has a wave transmitter (3a) and a wave receiver (3b) which are arranged at oppositely disposed sides of the seal (2) at an inner side of the seal (2) and at an outer side of the seal (2) and which are configured such that the waves propagate from the wave transmitter (3a) through the seal (2) to the wave receiver (3b) and the information corresponding to the state can be derived based on a change in the waves on this path.

10. A method of operating a vacuum device or vacuum system comprising a seal (2),
wherein information corresponding to the state of the seal (2) is determined by means of a sensor device (3),
wherein the sensor device (3) comprises a sensor for electromagnetic radiation and/or a sensor for ultrasound,
wherein the sensor has a wave transmitter (3a) and a wave receiver (3b) which are arranged at oppositely disposed sides of the seal (2) at an inner side of the seal (2) and at an outer side of the seal (2) and which are configured such that the waves propagate from the wave transmitter (3a) through the seal (2) to the wave receiver (3b) and the information corresponding to the state is derived based on a change in the waves on this path.

## Revendications

1. Appareil à vide, en particulier pompe à vide, comprenant
un joint d'étanchéité (2), en particulier élastique, et
un dispositif capteur (3) permettant de déterminer une information correspondant à l'état du joint d'étanchéité,
**caractérisé en ce que**
le dispositif capteur (3) comprend un capteur de rayonnement électromagnétique et/ou un capteur d'ultrasons,
le capteur comprenant un émetteur d'ondes (3a) et un récepteur d'ondes (3b) qui sont disposés sur des côtés opposés du joint d'étanchéité (2), sur un côté intérieur du joint d'étanchéité (2) et sur un côté extérieur du joint d'étanchéité (2), et qui sont conçus de telle sorte que les ondes se propagent de l'émetteur d'ondes (3a) à travers le joint d'étanchéité (2) vers le récepteur d'ondes (3b) et que l'information correspondant à l'état peut être déduite à l'aide d'une modification des ondes sur ce chemin.

2. Appareil à vide selon la revendication 1,
**caractérisé en ce que**
le joint d'étanchéité (2) est un joint d'étanchéité annulaire ou à cordon.

3. Appareil à vide selon l'une des revendications précédentes,
**caractérisé en ce que**
le dispositif capteur (3) est conçu pour déterminer l'information uniquement de manière ponctuelle.

4. Appareil à vide selon l'une des revendications précédentes,
**caractérisé en ce que**
il est prévu plusieurs dispositifs capteurs (3) pour le joint d'étanchéité (2).

5. Appareil à vide selon l'une au moins des revendications précédentes,
**caractérisé en ce que**
il est prévu une électronique d'évaluation (5) permettant d'émettre un signe d'erreur et/ou une demande de maintenance en fonction de l'information correspondant à l'état du joint d'étanchéité (2).

6. Appareil à vide selon l'une au moins des revendications précédentes,
**caractérisé en ce que**
le dispositif capteur (3) comprend un dispositif de transmission sans fil (6) pour l'information.

7. Appareil à vide selon l'une au moins des revendications précédentes,
**caractérisé en ce que**
le dispositif capteur (3) est conçu pour émettre une information caractérisant le joint d'étanchéité (2) en termes d'identité et/ou de type.

8. Appareil à vide selon l'une au moins des revendications précédentes,
**caractérisé en ce que**
le joint d'étanchéité (2) est disposé sur un raccord à bride (11, 12) vers un autre appareil à vide ou entre des parties de boîtier (8, 9, 10) de l'appareil à vide.

9. Système à vide comprenant deux appareils à vide qui sont reliés l'un à
l'autre en communiquant par fluide au niveau d'un emplacement de liaison, en particulier d'un raccord à bride (11, 12),
dans lequel
l'emplacement de liaison est rendu étanche au moyen d'un joint d'étanchéité (2), et
il est prévu un dispositif capteur (3) permettant de déterminer une information correspondant à l'état du joint d'étanchéité (2),
le dispositif capteur (3) comprend un capteur de rayonnement électromagnétique et/ou un capteur d'ultrasons,
le capteur comprend un émetteur d'ondes (3a) et un récepteur d'ondes (3b) qui sont disposés sur des côtés opposés du joint d'étanchéité (2), sur un côté intérieur du joint d'étanchéité (2) et sur un côté extérieur du joint d'étanchéité (2), et qui sont conçus de telle sorte que les ondes se propagent de l'émetteur d'ondes (3a) à travers le joint d'étanchéité (2) vers le récepteur d'ondes (3b) et que l'information correspondant à l'état peut être déduite à l'aide d'une modification des ondes sur ce chemin.

10. Procédé de fonctionnement d'un appareil à vide ou d'un système à vide, comprenant un joint d'étanchéité (2),
dans lequel
une information correspondant à l'état du joint d'étanchéité est déterminée au moyen d'un dispositif capteur (3),
le dispositif capteur (3) comprend un capteur de rayonnement électromagnétique et/ou un capteur d'ultrasons,
le capteur comprend un émetteur d'ondes (3a) et un récepteur d'ondes (3b) qui sont disposés sur des côtés opposés du joint d'étanchéité (2), sur un côté intérieur du joint d'étanchéité (2) et sur un côté extérieur du joint d'étanchéité (2), et qui sont conçus de telle sorte que les ondes se propagent de l'émetteur d'ondes (3a) à travers le joint d'étanchéité (2) vers le récepteur d'ondes (3b) et que l'information correspondant à l'état est déduite à l'aide d'une modification des ondes sur ce chemin.
